(19) **Europäisches Patentamt / European Patent Office / Office européen des brevets**

(11) **EP 4 367 369 B1**

(12) **FASCICULE DE BREVET EUROPEEN**

(45) Date de publication et mention de la délivrance du brevet:
**03.09.2025  Bulletin 2025/36**

(21) Numéro de dépôt: **22750866.0**

(22) Date de dépôt: **07.07.2022**

(51) Classification Internationale des Brevets (IPC):
**F01D 5/08** *(2006.01)*      **F01D 21/14** *(2006.01)*
**F01D 25/12** *(2006.01)*      **F01D 25/18** *(2006.01)*
**F02C 7/25** *(2006.01)*

(52) Classification Coopérative des Brevets (CPC):
**F01D 5/082; F01D 21/14; F01D 25/12; F01D 25/18; F02C 7/25;** F05D 2240/14; F05D 2260/20

(86) Numéro de dépôt international:
**PCT/FR2022/051362**

(87) Numéro de publication internationale:
**WO 2023/281221 (12.01.2023 Gazette 2023/02)**

(54) **SYSTÈME ANTI-INCENDIE POUR UNE TURBOMACHINE COMPRENANT DES MOYENS DE MAINTIEN D'UNE VITESSE D'AIR DE REFROIDISSEMENT ET TURBOMACHINE CORRESPONDANTE**

BRANDSCHUTZSYSTEM FÜR EINE TURBOMASCHINE MIT MITTELN ZUR AUFRECHTERHALTUNG EINER KÜHLLUFTGESCHWINDIGKEIT UND ENTSPRECHENDE TURBOMASCHINE

ANTI-FIRE SYSTEM FOR A TURBOMACHINE COMPRISING MEANS FOR MAINTAINING A COOLING AIR VELOCITY AND CORRESPONDING TURBOMACHINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **09.07.2021  FR 2107487**

(43) Date de publication de la demande:
**15.05.2024  Bulletin 2024/20**

(73) Titulaire: **Safran Helicopter Engines
64510 Bordes (FR)**

(72) Inventeurs:
• **RICHARD, Stéphane Raphaël Yves
77550 MOISSY-CRAMAYEL (FR)**
• **BREINING, Jean-Luc
77550 MOISSY-CRAMAYEL (FR)**
• **CLADIERE, Mathieu Pierre
77550 MOISSY-CRAMAYEL (FR)**
• **DESCUBES, Olivier Pierre
77550 MOISSY-CRAMAYEL (FR)**
• **DINQUEL, Jerome
77550 MOISSY-CRAMAYEL (FR)**
• **EXILARD, Gabriel Gorka
77550 MOISSY-CRAMAYEL (FR)**
• **PELLATON, Bertrand Guillaume Robin
77550 MOISSY-CRAMAYEL (FR)**
• **PERRA, Nicolas Christophe
77550 MOISSY-CRAMAYEL (FR)**
• **VIGUIER, Christophe Nicolas Henri
77550 MOISSY-CRAMAYEL (FR)**

(74) Mandataire: **Gevers & Orès
Immeuble le Palatin 2
3 Cours du Triangle
CS 80165
92939 Paris La Défense Cedex (FR)**

(56) Documents cités:
**EP-A1- 3 159 490      EP-A2- 2 192 268
FR-A1- 2 960 020      US-A- 4 759 688
US-A- 4 882 902**

## Description

### Domaine de l'invention

La présente invention concerne le domaine général des turbomachines. Elle vise en particulier un ensemble pour une turbomachine comprenant un système anti-incendie installé dans une cavité alimentée par un air de refroidissement, proche d'une zone chaude de la turbomachine, et qui comporte des moyens de maintien d'une vitesse de l'air de refroidissement entrant dans la cavité. L'invention concerne également une turbomachine comprenant un tel ensemble.

### Arrière-plan technique

L'art antérieur comprend les documents FR-A1-2960020, EP-A2-2192268, US-A-4882902, US-A-4759688, et EP-A-3159490.

Une turbomachine pour un aéronef comprend généralement, d'amont en aval et suivant le sens d'écoulement des gaz dans la turbomachine, une section de compresseur, une chambre de combustion, une section de turbine. La section de compresseur comprend par exemple un compresseur basse pression et un compresseur haute pression et la section de turbine comprend par exemple une turbine haute pression et une turbine basse pression. La turbomachine peut comprendre une turbine libre qui est entrainée par les gaz en sortie de la turbine haute pression ou de la turbine basse pression située en amont de celle-ci. Les pièces tournantes de ces compresseurs et/ou turbines telles que des arbres et des roues sont entrainées et/ou guidées en rotation à l'aide de paliers à roulements qui sont logés dans des enceintes de refroidissement et de lubrification. Les enceintes de refroidissement et de lubrification sont agencées à proximité de zones dites chaudes qui sont exposées de manière générale à des températures élevées car ces pièces sont traversées par les gaz de la turbomachine.

A cet effet, les turbomachines sont équipées d'un système de lubrification permettant de lubrifier et/ou de refroidir le ou les palier(s) à roulements nécessaires au guidage des arbres et qui sont montés dans les enceintes de refroidissement et de lubrification. Les turbomachines sont également équipées d'un dispositif de refroidissement permettant le refroidissement des pièces situées dans des zones chaudes de la turbomachine et la pressurisation des enceintes. De manière générale, le système de lubrification et le dispositif de refroidissement sont agencés dans des espaces restreints favorisant la proximité du circuit de lubrification du système de lubrification avec des pièces de rotors situées dans la zone chaude de la turbomachine. En cas de fuite, le lubrifiant peut rencontrer dans ces zones, des conditions de température, de pression, de vitesse d'écoulement de l'air de refroidissement et de niveau de turbulence de l'air de refroidissement qui sont favorables à une auto-inflammation. Ce risque d'auto-inflammation pourrait engendrer des dégradations des pièces de rotors, voire la rupture et/ou libération des pièces tournant à haute vitesse.

L'invention a pour but d'éviter les inconvénients précités.

### Résumé de l'invention

L'objectif de l'invention est de fournir une solution optimale permettant de limiter, voire d'empêcher une inflammation d'un fluide combustible dans une zone chaude de la turbomachine tout en étant simple et économique.

Nous parvenons à cet objectif conformément à l'invention grâce un ensemble pour une turbomachine, telle qu'un turboréacteur ou un turbopropulseur d'aéronef, l'ensemble comprenant au moins une turbine ayant un disque de turbine, une cavité annulaire agencée en amont du disque qui comprend un alésage interne et un dispositif de refroidissement destiné à alimenter la cavité en air de refroidissement via des moyens d'injection, l'ensemble comprenant un système anti-incendie comportant des moyens configurés de manière à d'une part, scinder la cavité annulaire en une première cavité et en une deuxième cavité et d'autre part, à maintenir une vitesse de l'air de refroidissement en sortie des moyens d'injection et à guider l'air de refroidissement dans la première cavité vers l'alésage interne du disque de turbine, les moyens comprenant un diffuseur coopérant avec les moyens d'injection et un capot annulaire destiné à coopérer avec le diffuseur et à couvrir des premiers organes de fixation agencés dans la cavité, le diffuseur et le capot étant configurés de manière que l'air de refroidissement en sortie du diffuseur est guidé au moins en partie par une surface radialement externe du capot.

Ainsi, cette solution permet d'atteindre l'objectif susmentionné. En particulier, de tels moyens permettent d'éviter qu'une éventuelle flamme suite à un départ de feu dans la cavité ne soit stabilisée. La configuration de ces moyens permet de conserver la vitesse d'écoulement de l'air de refroidissement depuis la sortie des moyens d'injection vers l'alésage interne du disque de turbine, et d'éviter les recirculations d'air de refroidissement dans les cavités, notamment la première cavité à proximité de la turbine (libre ou liée) afin de ne pas y stabiliser de feu.

L'ensemble comprend l'une ou plusieurs des caractéristiques suivantes, prises seules ou en combinaison :

- le diffuseur est pourvu de canaux destinés à être en communication fluidique avec les moyens d'injection.
- le capot annulaire est destiné à être monté sur un couvercle de la turbomachine.
- le diffuseur est annulaire, s'étend entre un bord amont et un bord aval suivant un axe D, les canaux étant formés dans l'épaisseur d'une paroi annulaire du diffuseur, les canaux ayant chacun un profil évolutif et débouchant chacun, d'une part dans le bord amont à travers une pluralité de lumières, et d'autre part dans le bord aval dans une ouverture annulaire, les lumières étant disposées autour de l'axe D et étant en communication fluidique avec les moyens d'injection du dispositif de refroidissement.
- le diffuseur présente une longueur prédéterminée entre le bord amont et le bord aval, le bord aval étant destiné à être sensiblement affleurant avec une extrémité libre, radialement interne, d'un premier flasque monté en amont du disque de turbine et avec un jeu prédéterminé.
- le système anti-incendie est réalisé selon une loi géométrique définie par la formule suivante :

$$\alpha < \frac{39}{\sqrt{L/LC}}$$ avec α étant un angle prédéterminé mesuré entre une première droite passant par un sommet d'une lumière, parallèle à un axe principal respectif des canaux, et une deuxième droite tangente à un flanc d'un canal, L étant la longueur prédéterminée du diffuseur et LC étant la largeur circonférentielle de chaque lumière.
- la turbomachine comprend un support de palier de guidage d'un arbre de la turbine qui comprend une première bride radiale, et un couvercle muni d'une deuxième bride radiale destinée à être fixée sur la première bride radiale par des premiers organes de fixation, les premiers organes de fixation étant répartis régulièrement autour de l'axe longitudinal X et le couvercle comprenant une paroi annulaire destinée à traverser l'alésage interne du disque de turbine.
- le capot annulaire est destiné à être monté sur le couvercle, le capot comprenant une paroi de fond annulaire destinée être fixée sur une portée annulaire du couvercle.
- le capot annulaire comprend une jupe annulaire s'étendant depuis la paroi de fond suivant un axe C du capot, la jupe annulaire comprenant une portion tubulaire et une portion tronconique reliant la portion tubulaire à la paroi de fond suivant l'axe C, le capot comprenant un rayon de courbure prédéterminé agencé d'une part, entre la portion tubulaire et la portion tronconique et d'autre part, entre la portion tronconique et la paroi de fond.
- le capot présente une bordure annulaire disposée de manière adjacente à une extrémité aval d'une paroi radialement interne du diffuseur, le diffuseur comprenant une paroi radialement externe ayant une bordure aval agencée radialement à l'extérieur du capot et à distance du capot.
- le disque de turbine comprend un rebord annulaire s'étendant circonférentiellement autour de l'axe longitudinal et axialement suivant l'axe longitudinal vers l'amont, une portion d'une veine d'écoulement d'air de refroidissement étant délimitée au moins en partie par une surface radialement interne du rebord annulaire et la surface radialement externe du capot.
- le rapport entre le rayon de courbure prédéterminé et la hauteur de la veine d'écoulement d'air de refroidissement est supérieur à 1.
- l'extrémité libre du flasque est annulaire et entoure radialement à l'extérieur un rebord annulaire du disque de turbine.
- le système est configuré de manière que le rapport de la vitesse de flamme turbulente sur la vitesse d'écoulement d'un mélange air/huile soit inférieur à 1.
- la portion tubulaire du capot comprend la bordure annulaire.
- la longueur prédéterminée du diffuseur est destinée à être inférieure ou égale à une distance mesurée entre une extrémité distale d'un rebord annulaire du disque de turbine et les moyens d'injection.
- les organes de fixation comprennent chacun une tête et en ce que la paroi de fond comprend des logements qui débouchent chacun dans un troisième trou, chaque logement étant destiné à logé et contenir la tête des organes de fixation.
- le nombre des organes de fixation est compris entre 4 et 8.
- le diffuseur est réalisé par une procédé de fabrication additive ou fusion sélective de poudre.
- chaque lumière est en communication fluidique avec un injecteur des moyens d'injection.
- l'angle α prédéterminé étant compris entre 9° et 24°.
- la veine d'écoulement comprend une portion de veine d'écoulement formée par une portion de la paroi radialement externe du diffuseur et une portion de la paroi du capot.
- le diffuseur est centré sur l'axe longitudinal de la turbomachine.
- le capot est centré sur l'axe longitudinal de la turbomachine.

L'invention concerne également une turbomachine en particulier d'un aéronef, ayant un axe longitudinal X et comprenant une turbine reliée par un arbre fournissant une puissance mécanique, une cavité agencée en amont d'un premier étage de la turbine, un dispositif de refroidissement équipé des moyens d'injection, et un ensemble tel que susmentionné, le système anti-incendie étant agencé dans la cavité et les moyens d'injection étant en communication fluidique avec les canaux du diffuseur.

La turbomachine comprend l'une ou plusieurs des caractéristiques suivantes, prises seules ou en combinaison :

- un premier flasque est agencé en amont du disque de turbine, le bord aval du diffuseur étant placé à proximité d'une extrémité radialement interne du premier flasque avec le jeu prédéterminé.
- la turbine est disposée en aval d'une section de turbine.

- l'arbre est un arbre de puissance fournissant une puissance mécanique sur un arbre de sortie.
- la turbine est une turbine liée ou une turbine libre.
- la deuxième cavité s'étend radialement à l'extérieur de la première cavité.

L'invention concerne en outre un aéronef comprenant au moins une turbomachine telle que susmentionnée.

**Brève description des figures**

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés dans lesquels :

[Fig. 1] La figure 1 représente une vue en coupe axiale et partielle d'un exemple de turbomachine comprenant au moins une turbine selon l'invention ;
[Fig. 2] La figure 2 est une vue en coupe axiale d'un système anti-incendie dans une cavité pressurisée selon l'invention ;
[Fig. 3] La figure 3 est une vue en perspective d'un exemple de support de palier de guidage d'un arbre de puissance d'une turbomachine selon l'invention ;
[Fig. 4] La figure 4 est une vue en perspective d'un exemple de couvercle destiné à être monté sur un support de palier selon l'invention ;
[Fig. 5] La figure 5 est une vue en perspective d'un exemple d'organe de guidage d'un air de refroidissement selon l'invention ;
[Fig. 6] La figure 6 est une vue en coupe axiale d'un système anti-incendie agencé dans une cavité pressurisée d'une turbomachine selon l'invention ;
[Fig. 7] La figure 7 représente en perspective un exemple d'organe d'adaptation d'un débit d'air vers un autre organe de la turbomachine selon l'invention ;
[Fig. 8] La figure 8 est une vue suivant une coupe axiale AA d'un canal de l'organe d'adaptation d'un débit d'air de la figure 7;
[Fig. 9] La figure 9 est une vue suivant une coupe BB du canal selon la figure 8 ; et [Fig. 10] La figure 10 est une vue suivant une coupe CC du canal selon la figure 8.

**Description détaillée de l'invention**

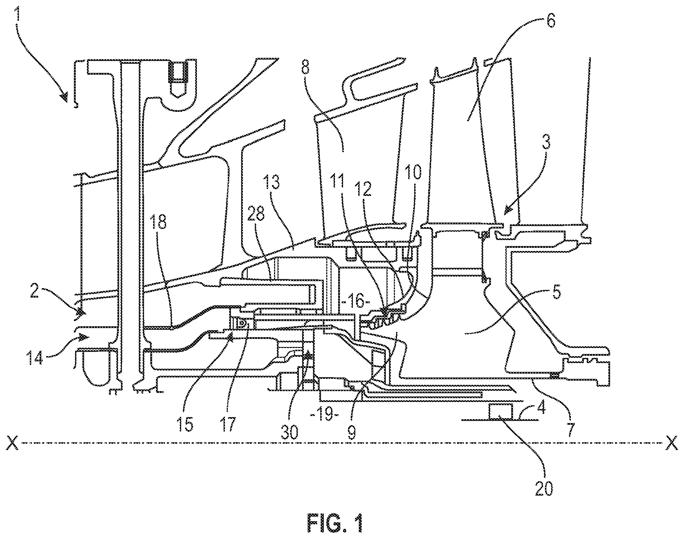

La figure 1 illustre partiellement une turbomachine 1, telle qu'un turboréacteur, un turbopropulseur ou un turbomoteur. Cette turbomachine est destinée à être montée dans un aéronef tel qu'un avion ou un hélicoptère.

Dans la présente demande, les termes « amont », « aval », « axial » et « axialement » sont définis par rapport au sens de circulation des gaz dans la turbomachine et également suivant l'axe longitudinal X (et même de gauche à droite sur la figure 1). Les termes « radial », « radialement », « interne » et « externe » sont également définis par rapport à un axe radial Z qui est perpendiculaire à l'axe X de la turbomachine.

De manière générale, une turbomachine, en particulier d'aéronef, d'axe longitudinal X, comprend d'amont en aval et dans le sens d'écoulement des flux de gaz ou d'air, une section de compresseur, une chambre de combustion, et une section de turbine. Ces éléments forment un générateur de gaz 2. La section de compresseur peut comprendre un compresseur basse pression et un compresseur haute pression. La section de turbine peut comprendre une turbine basse pression et une turbine haute pression. Ces turbines étant connues sous le terme de « turbine liée ». Chaque compresseur (basse ou haute pression) et chaque turbine (basse ou haute pression) comprend respectivement un ou plusieurs étages. Chaque étage comprend une roue d'aubes mobiles qui est montée en amont ou en aval d'une roue d'aubes fixes (ou d'aubes de stator). Les rotors du compresseur basse pression et de la turbine basse pression sont reliés l'un à l'autre par un arbre basse pression centré sur l'axe longitudinal X pour former un corps basse pression. De même, les rotors du compresseur haute pression et de la turbine haute pression sont reliés l'un à l'autre par un arbre haute pression centré sur l'axe longitudinal X pour former un corps haute pression. La turbomachine peut comprendre en amont de la section de compresseur une soufflante (non représentée). Celle-ci peut également comprendre en aval de la section de turbine une tuyère d'échappement des gaz. L'air qui entre dans la section de compresseur traverse la chambre de combustion laquelle émet des gaz de combustion vers la section de turbine comprenant au moins une turbine liée.

En se référant à la figure 1, la turbomachine comprend une turbine 3 supplémentaire dite turbine libre qui est montée en aval du générateur de gaz 2. En particulier, la turbine libre est montée en aval de la turbine haute pression ou de la turbine basse pression (de la section de turbine). Les gaz du générateur de gaz 2 sont envoyés sur la turbine libre 3 qui entraîne un arbre de puissance 4. Dans cet exemple, la turbine libre 3 est placée en amont de la tuyère d'échappement ou en remplacement de celle-ci. L'arbre de puissance fournit la puissance mécanique utile à un arbre de sortie pour la propulsion de l'aéronef. L'arbre de puissance est distinct des arbres haute pression et/ou basse pression et est coaxial avec ceux-ci. La turbine libre 3 comporte ici un étage de turbine avec une roue mobile et une roue fixe. La roue mobile comprend un disque 5 annulaire depuis lequel s'étendent radialement plusieurs aubes mobiles 6. Ces dernières sont réparties régulièrement autour du disque 5 et traversent une veine primaire dans laquelle circule un flux primaire. Le disque 5 est entrainé en rotation autour de l'axe longitudinal X par un arbre (ici l'arbre de puissance) qui traverse son alésage interne 7 (tourné vers l'axe X). La roue fixe se compose d'aubes fixes appelées distributeurs 8 et qui sont agencées en amont des aubes mobiles 6.

Le disque 5 comprend un rebord annulaire 9 qui s'étend depuis un voile 10 du disque 5 suivant l'axe longitudinal. Le rebord annulaire 9 s'étend également circonférentiellement autour de l'axe longitudinal X. Le rebord annulaire 9 porte un dispositif d'étanchéité 11 destiné à coopérer avec une extrémité libre, radialement interne 12a, d'un premier flasque 12. Le dispositif d'étanchéité 11 est avantageusement un joint labyrinthe qui comprend plusieurs léchettes ou lames s'étendant radialement et circonférentiellement autour de l'axe longitudinal depuis la paroi du rebord annulaire 9. Ces léchettes sont également disposées parallèlement suivant l'axe longitudinal X.

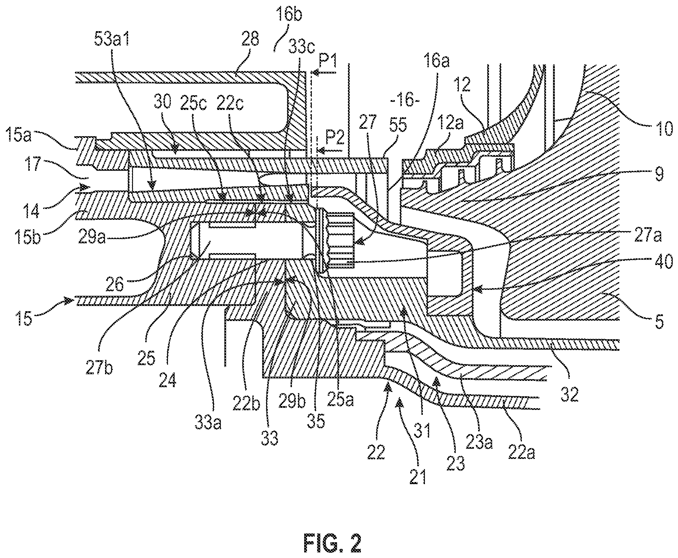

En référence aux figures 1 et 2, le premier flasque 12 est monté en amont du disque 10. Plus précisément, le premier flasque 12 est annulaire et est monté en amont du voile 10 du disque 5. L'extrémité radialement interne 12a porte également un revêtement abradable disposé en regard des léchettes pour garantir l'étanchéité du dispositif d'étanchéité 11. Le premier flasque 12 est également relié à une plateforme radialement interne 13 du distributeur amont.

En référence aux figures 1 et 2, la turbomachine 1 comprend généralement un dispositif de refroidissement 14 du disque 5 de la turbine libre 3 (ou d'une des turbines liées). Le dispositif de refroidissement 14 est alimenté en air qui est prélevé en amont de la turbomachine. Généralement, l'air de refroidissement est prélevé au niveau du compresseur haute pression ou basse pression. Le dispositif de refroidissement 14 comprend une tuyauterie externe (non représentée) qui contourne les disques de la section de turbine dans laquelle circule un air de refroidissement. La tuyauterie externe est couplée à une canalisation interne 18 qui est également connectée à un boîtier de palier arrière 15 qui comprend une première paroi 15a et une deuxième paroi 15b reliées à une structure fixe de la turbomachine.

Le boîtier 15 est une pièce de révolution autour de l'axe longitudinal. Le dispositif de refroidissement 14 comprend des moyens d'injection destinés à projeter l'air de refroidissement dans une cavité annulaire 16 agencée en amont du disque 5 de la turbine libre. Les moyens d'injection sont formés dans le boîtier de palier arrière 15. Cette cavité annulaire 16 est en particulier située en amont du premier étage de la turbine libre 3. Les moyens d'injection comprennent ici des injecteurs 17 qui sont couplés à la canalisation interne 18 et qui débouchent dans la cavité annulaire 16. Les injecteurs 17 sont des orifices. Alternativement, les injecteurs sont des buses. Les injecteurs 17 sont répartis régulièrement autour de l'axe longitudinal et sont placés avantageusement sensiblement en regard du disque 5 de la turbine libre 3. Chaque injecteur 17 présente un axe parallèle à l'axe de longitudinal X. Dans le présent exemple, les injecteurs 17 sont au nombre de trente-deux.

Une pièce structurelle 28 est montée sur le boîtier de palier arrière 15. La pièce structurelle 28 est une pièce annulaire qui a un axe centré sur l'axe longitudinal X et qui présente une section radiale en forme de U (en forme d'épingle). Celle-ci permet de faire le lien entre le boîtier 15 et le distributeur 8. En particulier, celle-ci permet de faire le lien entre la partie dite « chaude » et la partie dite « froide » du boîtier de palier arrière 15. Celle-ci est également souple. De par sa flexibilité, la pièce structurelle 28 absorbe les déformations dues aux écarts thermiques.

La turbomachine 1 comprend plusieurs paliers qui permettent de guider en rotation l'arbre basse pression, l'arbre haute pression et/ou l'arbre de puissance de la turbine libre 3. Les paliers sont de manière générale agencés dans différentes enceintes, telles que l'enceinte 19 de lubrification et de refroidissement, qui sont alimentées par du lubrifiant, ici de l'huile sous forme d'un brouillard, provenant d'un système de lubrification. L'enceinte 19 est pressurisée pour contenir l'huile de manière étanche dans celle-ci et aussi sous la forme de brouillard. Le brouillard d'huile permet une répartition homogène de l'huile sur les organes de la turbomachine à lubrifier.

La pressurisation de l'enceinte 19 est obtenue par l'injection d'air qui est prélevé au niveau du ou des compresseur(s) ou de la soufflante. L'air qui est prélevé pour la pressurisation des enceintes emprunte le même circuit que celui pour refroidir les disques. Préférentiellement, l'air de refroidissement est prélevé en amont de la soufflante de sorte que la température de l'air de refroidissement ne soit pas trop élevée et que celui-ci puisse refroidir efficacement les organes de la turbomachine. La cavité annulaire 16 est agencée radialement autour de l'enceinte 19 et est séparée de celle-ci par un couvercle 31. Le couvercle 31 lui-même est disposé radialement à l'extérieur d'un support de palier qui délimite en partie l'enceinte 19.

En référence à la figure 1, l'arbre de puissance est guidé en rotation par un palier 20 situé en aval de celui-ci et qui est agencé dans l'enceinte 19. Ce palier 20 coopère avec le support de palier 21 aval qui est fixé généralement à une structure fixe de la turbomachine. Le palier aval 20 est de manière avantageuse un palier à roulements. Ce dernier comprend une bague interne et une bague externe entre lesquelles sont agencés les organes roulants. Les organes roulants sont par exemple des rouleaux.

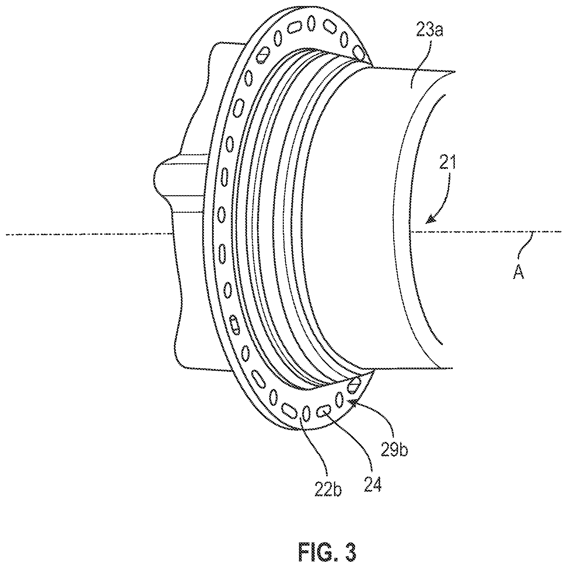

Sur la figure 2 et la figure 3, le support de palier 21 présente une forme de révolution s'étendant autour d'un axe A qui est coaxial avec l'axe longitudinal X de la turbomachine en situation d'installation. Le support de palier 21 est formé de deux parties dénommées ci-après première virole 22 et deuxième virole 23. La première virole 22 comprend plus précisément une première paroi annulaire 22a et une première bride radiale 22b de fixation qui s'étend radialement vers l'extérieur depuis une surface radialement externe de la première paroi annulaire 22a. La première virole 22 est avantageusement venue de matière. La première paroi annulaire 22a porte la bague externe du palier aval 20. La bague interne du palier aval 20 coopère avec des moyens montés sur l'arbre de puissance. La deuxième virole 23 comprend une deuxième paroi annulaire 23a qui est montée sur la première virole 22a et qui s'étend radialement à l'extérieur de la première paroi annulaire 22a. La deuxième paroi annulaire 23a traverse au moins en partie l'alésage interne 7 du disque 5 de la turbine libre 3 suivant l'axe longitudinal X. La deuxième paroi annulaire 23a supporte une partie statique d'une étanchéité par labyrinthe qui est située entre l'enceinte 19 et la cavité annulaire 16.

Le support de palier 21 est fixé à la structure fixe via le boîtier de palier arrière 15. En particulier, la première bride radiale 22b est destinée à être fixée sur la deuxième paroi 15b du boîtier de palier arrière 15. Pour cela, la première bride radiale 22b comprend une pluralité de premiers trous 24 traversant la paroi de la première bride radiale 22b de part et d'autre suivant un axe parallèle à l'axe longitudinal X. Les premiers trous 24 sont répartis régulièrement autour de l'axe longitudinal. La deuxième paroi 15b du boîtier de palier arrière 15 comprend également une portion radiale 25 dans laquelle sont formés plusieurs trous borgnes 26. Les trous borgnes 26 s'étendent suivant un axe parallèle à l'axe longitudinal X. Ceux-ci sont destinés à coopérer avec les premiers trous 24 de la première bride radiale 22b. Il y a autant de trous borgnes 26 que de premiers trous 24 de fixation. De manière avantageuse, des premiers organes de fixation 27 tels que des vis, des tiges et/ou boulons, etc. permettent de fixer le support de palier 21 sur le boîtier 15. Dans l'exemple représenté, les premiers organes de fixation 27 comprennent des vis avec une tête 27a et une tige 27b. Avantageusement et comme cela est visible sur la figure 2, les premiers organes de fixation 27 sont agencés dans la cavité 16.

La première bride radiale 22b comprend une première surface d'appui 29a qui est définie dans un plan radial perpendiculaire à l'axe A du support de palier. La première bride radiale 22b comprend également une deuxième surface d'appui 29b qui est définie dans un plan perpendiculaire à l'axe A. Les première et deuxième surfaces 29a, 29b d'appui sont opposées suivant l'axe longitudinal X.

La portion radiale 25 comprend également une surface d'appui aval 25a qui est définie dans un plan perpendiculaire à l'axe longitudinal X. La première surface d'appui 29a de la première paroi radiale 22b est destinée à être en appui contre la surface d'appui aval 25a. Celles-ci créent une liaison appui-plan. Dans le présent exemple, la première bride radiale 22b comprend un bord annulaire qui présente une surface annulaire 22c affleurante avec une surface radialement externe 25c de la portion radiale 25 de sorte à ne pas perturber l'écoulement de l'air de refroidissement en sortie du dispositif de refroidissement 14.

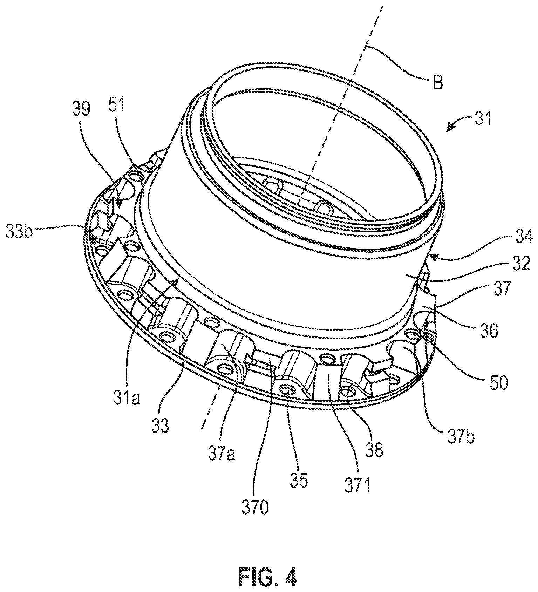

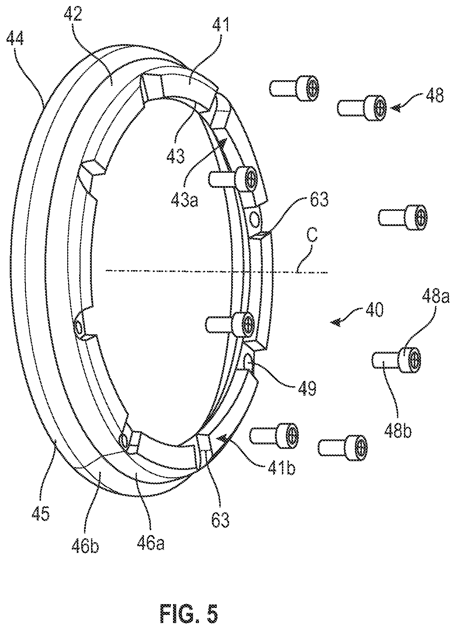

Sur la figure 4 est représenté le couvercle 31. Ce dernier est destiné à être monté sur le support de palier 21. Le couvercle 31 est installé dans la cavité annulaire 16 et l'air de refroidissement en sortie des injecteurs circule autour de celui-ci et vers l'alésage 7. Le couvercle 31 comprend une forme de révolution autour d'un axe B. L'axe B est coaxial avec l'axe longitudinal X en situation d'installation. Le couvercle 31 comprend une deuxième bride radiale 33 qui est destinée à être fixée sur la première bride radiale 22b du support de palier 21. La fixation de la première bride radiale 22b sur la deuxième bride radiale 33 est réalisée au moyen des premiers organes de fixation 27 (représentés sur la figure 5). Le couvercle 31 comprend également une paroi annulaire 32 qui s'étend suivant l'axe B et au moins en partie à travers l'alésage interne du disque de turbine. La deuxième bride radiale 33 s'étend radialement vers l'extérieur depuis une surface radialement externe 34 de la paroi annulaire 32. La paroi annulaire 32 présente un diamètre interne qui est supérieur au diamètre externe de la deuxième virole 23 (en particulier la deuxième paroi annulaire 22a) du support de palier 21. Ces premiers organes de fixation 27 sont répartis régulièrement autour de l'axe longitudinal X. A cet effet, la deuxième bride radiale 33 comprend une pluralité de deuxièmes trous 35 qui traversent chacun la paroi de la bride radiale 33 de part et d'autre suivant un axe parallèle à l'axe longitudinal X. Les deuxièmes trous 35 sont destinés à coopérer avec les premiers trous 24 de la première bride radiale 22b. En situation d'installation les premier et deuxième trous 24, 35 sont coaxiaux.

La deuxième bride radiale 33 comprend une surface d'appui amont 33a (cf. figure 2) qui est définie dans un plan radial perpendiculaire à l'axe B du couvercle 31. La surface d'appui amont 33a est destinée à venir en appui contre la deuxième surface d'appui 29b de la première bride 22b de sorte à créer une liaison appui-plan. La deuxième bride radiale 33 comprend également un bord annulaire qui présente une surface annulaire 33c sensiblement affleurante avec la surface 22c de la première bride.

Tel que représenté sur la figure 4, le couvercle 31 comprend une portée annulaire 36 s'étendant radialement vers l'extérieur et en aval de la deuxième bride radiale 33. En particulier, le couvercle 31 comprend une pluralité de saillies 37 qui s'étendent radialement vers l'extérieur depuis la surface radialement externe 34 de la paroi annulaire 32 et qui sont régulièrement réparties autour de l'axe du couvercle 31. Les saillies 37 s'étendent également depuis une surface aval 33b de la deuxième bride radiale 33 suivant l'axe longitudinal X. La surface aval 33b est opposée axialement à la surface d'appui amont 33a. La portée annulaire 36 est formée par les saillies 37. Les saillies 37 sont définies par des évidements 38 dans lesquels débouchent les seconds trous 35 de fixation de la deuxième bride radiale 33. En d'autres termes, les saillies 37 sont disposées en alternance avec les seconds trous 35 autour de l'axe longitudinal. Les évidements 38 présentent une orientation sensiblement parallèle à l'axe longitudinal et présentent chacune une section semi-cylindrique.

Les saillies 37 sont délimitées circonférentiellement par des pans latéraux 37a, 37b (qui sont aussi les parois des évidements). Celles-ci sont également délimitées chacune en aval par une surface aval d'appui 39. Cette dernière forme une surface d'appui aval annulaire de la portée annulaire 36. La surface aval d'appui 39 est définie dans un plan qui est perpendiculaire à l'axe longitudinal X.

La turbomachine 1 comprend également un système anti-incendie 30 configuré de manière à annihiler un départ de feu dans la cavité 16 voire de supprimer toute possibilité d'inflammation dans la cavité 16. En effet, l'enceinte 19 avec l'huile en suspension est à proximité de la cavité 16 qui reçoit de l'air de refroidissement via le dispositif de refroidissement 14. L'huile, l'air de refroidissement et la chaleur régnant dans cette zone pourraient permettre une combustion et un départ de feu générant une flamme dans cette zone et dans la cavité 16 en cas de fuite d'huile de l'enceinte vers la cavité. Un feu pourrait entraîner de fortes dégradations des pièces de rotors, voire la libération de parties de pièces à haute énergie.

Lorsqu'une flamme est générée dans une cavité exposée à l'écoulement d'un mélange d'un premier fluide (air) et d'un deuxième fluide combustible (huile), celle-ci peut être stabilisée si la vitesse de la flamme est suffisante pour dépasser la vitesse d'écoulement de l'air de refroidissement dans la cavité. La vitesse de la flamme dépend de la température de l'air de refroidissement, de la pression et de la concentration d'huile.

La vitesse de flamme maximale possible est la vitesse de la flamme turbulente ST au taux de plissement maximal. Il est considéré que le mélange air de refroidissement/huile est stoechiométrique pour maximiser la vitesse laminaire de flamme, qu'il n'y a aucun transfert de chaleur aux parois de la cavité pour maximiser la vitesse laminaire de flamme et que le taux de plissement est à saturation pour maximiser le facteur de plissement de flamme. La vitesse de flamme laminaire est un constituant des carburants (essence, kérosène, gazole, etc.) qui forment les combustibles.

Le système 30 est configuré de manière que le rapport de la vitesse de flamme sur la vitesse d'écoulement de l'air de refroidissement soit inférieur à 1. En particulier, le système 30 comprend des moyens de maintien configurés de manière à maintenir une vitesse de l'air de refroidissement en sortie des moyens d'injection et à guider l'air de refroidissement à travers l'alésage du disque de turbine du premier étage de turbine. En maintenant la vitesse de sortie de l'air de refroidissement des moyens d'injections et en évitant les recirculations, il est possible de contrôler et d'éviter la stabilisation de la flamme générée dans la cavité.

Selon l'invention, le système anti-incendie 30 comprend un organe d'adaptation de la vitesse de l'air de refroidissement en sortie des moyens d'injection du dispositif de refroidissement 14. En particulier, l'organe d'adaptation est configuré de manière à conserver la vitesse en sortie des injecteurs 17. Cet organe est un diffuseur 52 qui coopère avec les moyens d'injection (ici les injecteurs). Le diffuseur 52 permet également de guider l'air de refroidissement vers l'alésage 7 du disque 5 de la turbine libre. L'organe d'adaptation fait partie des moyens de maintien de la vitesse.

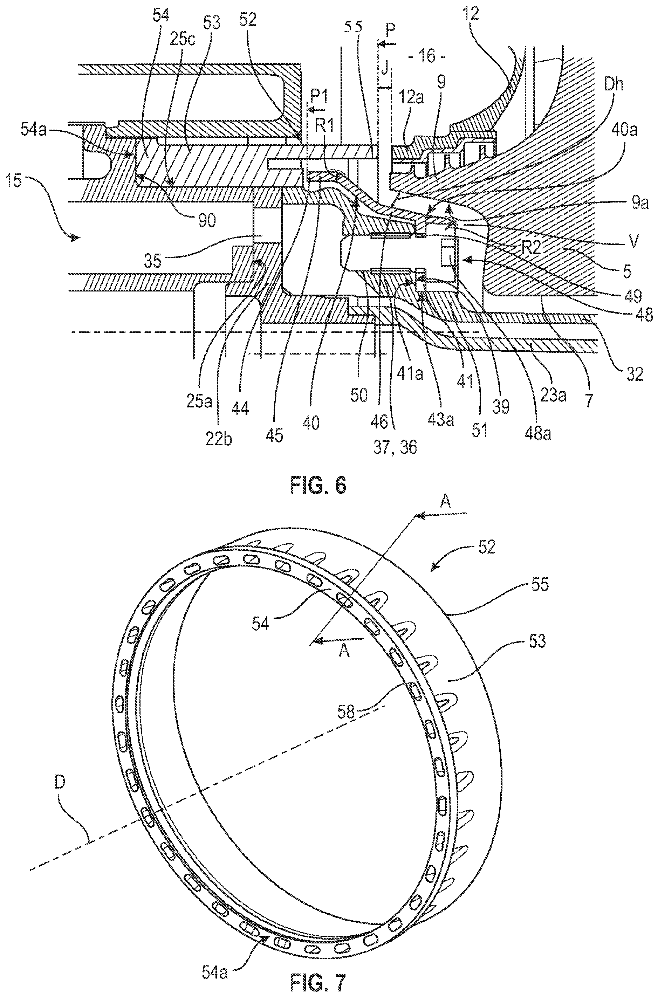

Sur la figure 7, le diffuseur 52 est annulaire et comprend une forme de révolution autour d'un axe D. L'axe D est coaxial à l'axe de la turbomachine 1 en situation d'installation. Le diffuseur 52 comprend une paroi annulaire 53 qui s'étend suivant l'axe D. La paroi annulaire 53 est délimitée en amont par un bord amont 54 et en aval par un bord aval 55. Le bord amont 54 et le bord aval 55 sont opposés suivant l'axe D. Le bord amont 54 présente une surface 54a qui est définie dans un plan qui est perpendiculaire à l'axe D. La surface 54a est destinée à être en appui contre une surface d'appui 90 (cf. figure 6) du boîtier de palier arrière 15. En particulier, la surface d'appui 90 annulaire est définie dans un plan qui est perpendiculaire à l'axe longitudinal X. La surface d'appui 90 est formée par un épaulement qui forme également la portion radiale 25. Par ailleurs, la surface d'appui 90 est située en amont de la surface d'appui aval 25a. Les injecteurs 17 du dispositif de refroidissement 14 débouchent dans la surface d'appui 90.

La paroi annulaire 53 du diffuseur 52 présente un diamètre interne qui est supérieur au diamètre externe du bord annulaire (délimitée par la surface annulaire 22c) de la première bride radiale 22b. De même, le diamètre de la paroi annulaire 53 est supérieur au diamètre de la portion radiale 25 (délimitée par la surface 25c).

Le diffuseur 52 installé dans la cavité annulaire scinde celle-ci en une première cavité 16a et en une deuxième cavité 16b. La deuxième cavité 16b est située radialement à l'extérieur du diffuseur 52 et est considérée comme une cavité morte puisqu'aucun air de refroidissement n'est destiné à y circuler. La première cavité 16a est située radialement à l'intérieur du diffuseur 52. L'air de refroidissement est majoritairement guidé vers la première cavité 16a qui forme une veine d'air de refroidissement V.

En effet, le diffuseur 52 s'étend, suivant l'axe longitudinal, entre les moyens d'injection (injecteurs 17) et de l'extrémité radialement interne 12a du premier flasque 12 (et/ou une extrémité distale du rebord annulaire 9 du disque). La paroi annulaire 53 présente une longueur L1 qui est supérieure à la longueur de la portion radiale 25 (et en particulier de la surface 25c de la portion radiale 25). En situation d'installation, le bord amont 54 est en appui contre la surface d'appui 90 et au moins une portion de la surface radialement interne de la paroi annulaire 53 est en contact avec la surface radialement externe 25c du boîtier 15.

Comme cela est illustré également sur les figures 2 et 6, le bord aval 55 du diffuseur se trouve à proximité de l'extrémité radialement interne 12a du premier flasque 12. La longueur L1 est sensiblement égale à la distance entre la sortie des moyens d'injection (injecteurs 17) et l'extrémité radialement interne 12a du premier flasque 12.

Un débit d'air de refroidissement circule dans le dispositif d'étanchéité 11 et un débit d'air de refroidissement circule dans la veine d'écoulement V. Un jeu J subsiste entre le bord aval 55 et cette extrémité radialement interne 12a. Toutefois, l'air de refroidissement ne circule pas à travers ce jeu J. Le jeu J permet de prendre en compte les dilatations thermiques des pièces et notamment du diffuseur et du flasque. De manière avantageuse, le jeu est inférieur ou égal à 1 mm.

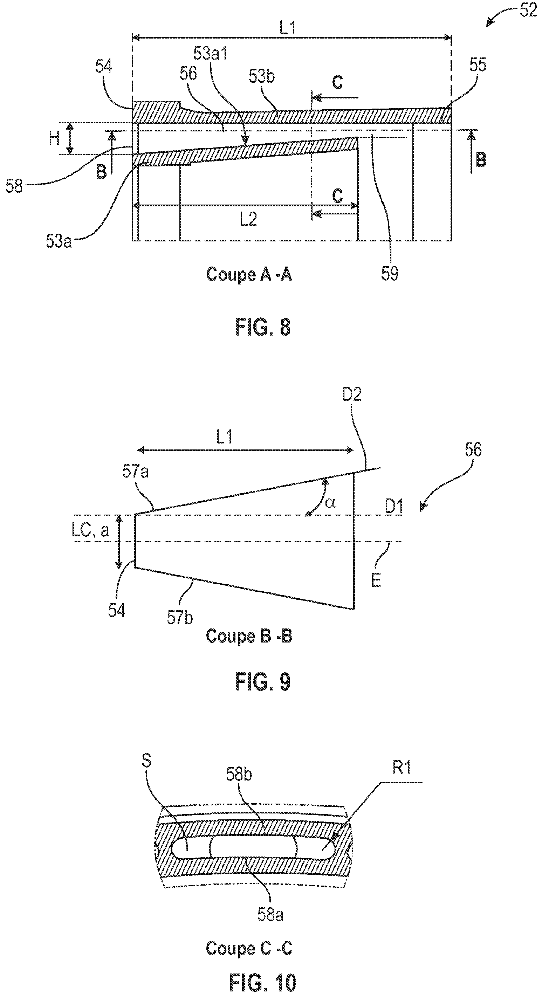

En référence aux figures 8 à 10, le diffuseur 52 comprend une pluralité de canaux 56 qui sont formés dans l'épaisseur de la paroi annulaire 53. Les canaux 56 sont destinés à être en communication fluidique avec les moyens d'injection (en particulier les injecteurs 17) du boitier 15. Il y a autant de canaux que d'injecteurs 17. Ici, il y a donc trente-deux canaux 56 qui sont répartis régulièrement autour de l'axe D. Chaque injecteur 17 débouche dans un canal 56.

Les canaux 56 forment une paroi radialement interne 53a et une paroi radialement externe 53b. La paroi radialement interne 53b présente une longueur L2 inférieure à la longueur de la paroi radialement externe 53b. La longueur L2 est mesurée entre une première extrémité amont et une première extrémité aval. La longueur de la paroi radialement externe 53b correspond à la longueur L1 de la paroi annulaire 53. La paroi radialement externe comprend une deuxième extrémité aval en aval de la première extrémité aval. La deuxième extrémité aval forme le bord aval 55 du diffuseur 52. Chaque canal 56 est délimité par la paroi radialement interne 53b et la paroi radialement externe 53a qui sont reliées par un premier flanc 57a et un deuxième flanc 57b. Les premier et deuxième flancs 57a, 57b sont opposés suivant la direction circonférentielle (autour de l'axe D).

De manière avantageuse, les canaux 56 ont un profil évolutif de sorte à pourvoir guider le flux et contrôler la vitesse d'écoulement de l'air de refroidissement à travers le diffuseur 52 et dans la cavité. Nous entendons par « profil évolutif » le fait d'avoir une variation de forme, d'épaisseur et/ou des dimensions suivant une ou plusieurs sections. Les canaux 56 débouchent chacun dans le bord amont 54 respectivement à travers une pluralité de lumières 58. En particulier, chaque lumière 58 débouche dans la surface 54a. Les lumières 58 sont disposées autour de l'axe du diffuseur 52. De manière avantageuse, mais non limitativement, les lumières 58 sont espacées et réparties régulièrement autour de l'axe du diffuseur. Dans le présent exemple, chaque lumières 58 présente une forme allongée (ou oblongue) suivant la direction circonférentielle (autour de l'axe D). Les canaux 56 débouchent également dans une ouverture 59 annulaire au niveau du bord aval 55. L'ouverture 59 annulaire est une ouverture unique.

Le profil évolutif des canaux 56 est obtenu par la variation de la hauteur radiale et de la largeur circonférentielle de ceux-ci. Plus précisément, chaque canal 56 présente une hauteur radiale H qui varie entre le bord amont 54 et le bord aval 55. Plus précisément encore, la hauteur H varie en décroissant depuis le bord amont 54 en direction du bord aval 55. En d'autres termes, la hauteur au niveau de la lumière 58 est supérieure à la hauteur au niveau du bord aval 55. Chaque canal 56 présente également une largeur circonférentielle LC, mesurée entre le premier et le deuxième flanc 57a, 57b, qui varie entre le bord amont 54 et le bord aval 55. La largeur circonférentielle LC est croissante depuis le bord amont 54 vers le bord aval 55.

La section de chaque canal est sensiblement constante (à +/- 20%). En particulier, la variation de la hauteur H et de la largeur circonférentielle LC est sensiblement constante. De la sorte, la section des canaux 56 évolue peu et la vitesse d'écoulement évolue peu également, restant ainsi quasi constante entre l'entrée et la sortie du diffuseur 52 tout en orientant l'air de refroidissement correctement pour refroidir le disque 5 de la turbine libre.

Dans l'exemple de réalisation, chaque lumière 58 comprend une hauteur comprise entre 3 et 4 mm. Celle-ci comprend une largeur LC comprise entre 7 et 8.5 mm. Celle-ci comprend également une hauteur de lumière correspondant à la hauteur du canal au niveau de la lumière (entrée du canal).

Sur la figure 10, chaque lumière 58 comprend également un rayon de raccordement R1 de l'ordre de 1.7 mm entre le premier bord 58a et le deuxième bord 58b de la lumière entre lesquels est mesurée la hauteur de la lumière. Ce rayon de raccordement est sensiblement identique entre la paroi radialement interne et la paroi radialement externe au niveau des flancs.

Chaque section S d'un canal 56 du diffuseur 52 (dans un plan perpendiculaire à l'axe D du diffuseur) est inférieure au rapport $D/\rho ST$. De la sorte, la forme du canal permet de maintenir la vitesse d'écoulement de l'entrée (lumière) à la sortie (ouverture) de chaque canal du diffuseur 52. S est la section de chaque canal 56, $\rho$ est la masse volumique de l'air de refroidissement en sortie des moyens d'injection, ST est la vitesse de flamme et D est le débit massique de l'air de refroidissement. La section de chaque canal peut être comprise entre 26 et 31 mm$^2$.

La figure 9 représente une section suivant la coupe BB de la figure 8 (dans la direction circonférentielle). Sur cette section nous voyons qu'un canal 56 présente une section sensiblement de forme tronconique et en particulier droit. Les flancs 57a, 57b de chaque canal 56 sont inclinés suivant un angle α (alpha) prédéterminé. L'angle α prédéterminé est mesuré entre une première droite D1 passant par un sommet d'une lumière (correspondant à un canal respectivement), parallèle à l'axe principal E respectif du canal 56, et une deuxième droite D2 tangente avec le flanc du canal. De manière avantageuse, mais non limitativement, l'angle $\alpha$ prédéterminé est compris entre 9° et 24°.

De manière avantageuse, la forme du diffuseur 56 est obtenue en appliquant la formule suivante :

$$\alpha < \frac{39}{\sqrt{L/a}}$$

Avec $\alpha$ étant l'angle prédéterminé, L étant une longueur prédéterminée du diffuseur 52 entre le bord amont 54 et le bord aval 55 (soit la longueur L1), et « a » étant la largeur circonférentielle LC (ou le diamètre de chaque lumière). Cette formule est une formule empirique qui vise à identifier l'angle à partir duquel un décollement a lieu. Des nombreux essais expérimentaux ont été réalisés sur le diffuseur afin de caractériser les différents paramètres. La formule est par exemple décrite dans la publication "Mémento des pertes de charges", I-E. Idel'-cik, Ed. Eyrolles, Paris, 1986.

De manière avantageuse, mais non limitativement le diffuseur 52 comprend des moyens d'étanchéité agencés entre les canaux 56 suivant la direction circonférentielle. Les moyens d'étanchéité comprennent les parois de séparation entre les canaux.

De manière avantageuse, le diffuseur 52 est réalisé par un procédé de fabrication additive ou fusion sélective de poudre. De la sorte, celui-ci est réalisé d'un seul tenant (venu de matière). La fabrication additive permet de réaliser des géométries complexes et des pièces venues de matière (en une seule pièce). De préférence, mais non limitativement, la fabrication additive est un procédé de fusion laser sur lit de poudre connu sous l'acronyme anglais SLM pour « Selective Laser Melting ». Le procédé est réalisé à partir d'une installation dans laquelle plusieurs couches de matériaux, en particulier sous forme de poudre, sont superposées sur un support de fabrication. Les couches de poudre issues d'un réservoir d'alimentation sont transférées sur le support de fabrication et sont ensuite fondues les unes après les autres au moyen d'un faisceau laser se déplaçant sur la surface de chaque couche. Avec le procédé de fabrication additive, les canaux ayant un tel profil évolutif à la fois convergent (radialement) et divergent (en direction azimutale), ainsi que des dimensions aussi petites peuvent être réalisés d'un seul tenant. De même, le diffuseur 52 étant réalisé par fabrication additive, les parois inter-canaux formant les moyens d'étanchéité sont continus et sans marches, ce qui garantit une très bonne étanchéité.

Le diffuseur 52 est réalisé dans un matériau métallique. Un exemple de matériau métallique est un alliage à base de Nickel tel que l'Inconel 718. Un tel matériau présente une résistance thermomécanique élevée.

Selon l'invention, en référence aux figures 2, 4 et 5, le système anti-incendie 30 comprend en outre un capot 40 annulaire destiné à coopérer avec le diffuseur.

De manière avantageuse, mais non limitativement, le capot est monté sur le couvercle 31. De manière générale et tel qu'illustré, le capot 40 coopère avec le diffuseur 52 pour former une portion de la veine d'écoulement V d'air de refroidissement.

Plus précisément, le capot 40 comprend une forme de révolution autour d'un axe C. L'axe C est coaxial avec l'axe longitudinal X de la turbomachine en situation d'installation. Le capot 40 est destiné à couvrir les premiers organes de fixation 27 afin d'empêcher la recirculation d'air au niveau de ceux-ci. En effet, et comme cela est représenté sur la figure 1, les premiers organes de fixation 27 sont agencés dans la première cavité 16a et sont situés en aval des moyens d'injection 17. En l'absence du capot, les recirculations créent des turbulences qui par nature favorisent l'accroche des flammes. Le capot 40 permet d'éviter les turbulences et de réduire la section de passage sous le disque et donc d'accélérer la vitesse de l'air de refroidissement. A cet effet, la première bride radiale 22b du support de palier 21 est montée sur le boîtier 15 qui comprend une portion de circuit d'air de refroidissement. L'air de refroidissement en sortie des injecteurs 17 est injecté suivant une direction parallèle à l'axe longitudinal et radialement à l'extérieur du capot 40. L'air de refroidissement circule dans la première cavité 16a (veine d'air d'écoulement V).

Le capot 40 et le diffuseur 52 forment les moyens de maintien de la vitesse et de guidage de l'air de refroidissement dans la cavité (notamment la première cavité 16a) et dans l'alésage du disque. Le diffuseur 52 et le capot 40 sont configurés de manière que l'air de refroidissement en sortie du diffuseur est destiné à être guidé au moins en partie par une surface radialement externe du capot.

En référence à la figure 6, le fait de rapporter et de fixer le capot 40 sur le couvercle 31 permet de reconfigurer une portion d'une veine d'écoulement V d'air de refroidissement entre le disque 5 et le capot 40. De la sorte, l'air de refroidissement ne vient plus circuler autour des vis (organes de fixation 27) qui sont couvertes par le capot. En particulier, la portion de veine d'écoulement V d'air de refroidissement qui est reconfigurée est délimitée au moins en partie par une surface radialement interne 9a du rebord annulaire 9 et une surface radialement externe 40a du capot. Le diamètre interne délimité par la surface radialement interne 9a est supérieur au diamètre externe de la jupe annulaire du capot (décrit ci-après) et définie par une surface radialement externe. La veine d'écoulement V d'air de refroidissement présente une hauteur Dh qui est sensiblement constante entre le rebord annulaire et l'alésage interne 7 du disque 5.

Sur la figure 5, le capot 40 comprend une paroi de fond 41 depuis laquelle s'élève une jupe annulaire 42. La paroi de fond 41 est traversée par un alésage central 43 suivant l'axe C du couvercle. L'alésage central 43 définit une surface annulaire interne 43a. La jupe annulaire 42 s'étend suivant l'axe C entre la paroi de fond 41 et une bordure annulaire 44, amont. La paroi annulaire 32 du couvercle 31 est destinée à traverser l'alésage central 43 de la paroi de fond 41 du capot 40. De manière avantageuse, le diamètre interne de la jupe annulaire 42 du capot 40 est supérieur au diamètre externe de la paroi annulaire du couvercle 31 de manière à couvrir les premiers organes de fixation 27.

Suivant l'exemple représenté, le diamètre de la jupe annulaire 42 varie entre la paroi de fond 41 et la bordure annulaire 44. En particulier, la jupe annulaire 42 présente un diamètre décroissant de la bordure annulaire 44 à la paroi de fond 41. Sur la figure 2, la bordure annulaire est définie dans un plan radial P1 qui est en amont d'un plan radial P2 dans lequel est définie la surface d'appui d'une tête de vis 27a des premiers organes de fixation 27. En d'autres termes, la bordure annulaire 44 chevauche au moins en partie les saillies 37 du couvercle. Cela permet de bien couvrir les vis. La tige 27b reliée à la tête de vis 27a s'étend à travers les trous 24, 35 des brides 22b, 33.

Plus précisément encore et en référence aux figures 5 et 6, la jupe annulaire 42 comprend une portée tubulaire 45 qui comprend la bordure annulaire 44. La jupe annulaire 42 comprend également une portion sensiblement tronconique 46 qui relie la portion tubulaire à la paroi de fond 41.

De manière avantageuse, le capot 40 comprend un premier rayon de courbure « r1 » prédéterminé qui est agencé entre la portion tubulaire 45 et la portion tronconique 46 et un deuxième rayon de courbure « r2 » prédéterminé qui est agencé entre la portion tronconique 46 et la paroi de fond 41. Dans l'exemple représenté le premier et le deuxième rayon de courbure sont identiques.

Le rapport entre le rayon de courbure prédéterminé (r1, r2) et la hauteur Dh de la veine d'écoulement d'air de refroidissement V est supérieur à 1. Un tel rapport permet de conserver la vitesse et éviter les recirculations de l'air de refroidissement en sortie des moyens d'injections vers l'alésage interne du disque 5. Un exemple de rayon de courbure est compris entre 2 et 3 mm.

Suivant un exemple de réalisation illustré sur la figure 5, la portion sensiblement tronconique comprend une première portion tronconique 46a qui est reliée à la paroi de fond 41 et une deuxième portion tronconique 46b qui est agencée entre la portion tubulaire 45 et la première portion tronconique 46a. De manière alternative, la jupe annulaire 42 comprend une seule portion tronconique dont la variation de diamètre est constante. Les rayons de courbure r1, r2 sont agencés aux mêmes endroits.

La paroi de fond 41 est destinée être fixée sur la portée annulaire 36 du couvercle 31 par des deuxièmes organes de fixation 48 illustrés sur les figures 5 et 6. Les deuxièmes organes de fixation 48 peuvent être des vis, des tiges et/ou boulons, etc. La paroi de fond 41 comprend une pluralité de troisièmes trous 49 qui traversent la paroi de part et d'autre suivant un axe parallèle à l'axe C. Ces troisièmes trous 49 sont destinés à coopérer avec des quatrièmes trous 50 qui sont aménagés dans la portée annulaire 36 du couvercle 31. La paroi de fond 41 comprend une surface amont 41a (cf. figure 6) qui est définie dans un plan perpendiculaire à l'axe longitudinal X. La surface amont 41a vient en appui contre la surface d'appui annulaire 39 du couvercle. Les quatrièmes trous 50 traversent la paroi des saillies 37 de part et d'autre suivant l'axe B comme cela est illustré sur les figures 4, 5 et 6.

En référence à la figure 5, la paroi de fond 41 comprend des logements 63 qui débouchent chacun dans un troisième trou 49. Chaque logement 63 débouche également sur une surface aval 41b de la paroi de fond 41. La surface aval 41b est opposée à la surface amont 41a suivant l'axe du capot 40 (axe longitudinal en situation d'installation). Dans le présent exemple, le logement 63 est un évidement réalisé dans l'épaisseur de la paroi de fond 41. Les logements 63 s'ouvrent chacun également sur la surface annulaire interne 43a de l'alésage centrale du capot 40. De manière alternative, les logements sont réalisés par des lamages. Ici, les deuxièmes organes de fixation sont avantageusement des vis ayant chacune une tête 48a et une tige 48b. Chaque tête 48a est logée et contenue dans un logement 63. Les têtes ne dépassent pas du logement 63 (notamment lorsque les organes de fixation 48 sont montés dans le capot 40 et le couvercle 31). En d'autres termes, la hauteur du logement suivant l'axe longitudinal est égale ou supérieure à la hauteur d'une tête 48a. Cela permet d'éviter les recirculations et d'obstruer la veine d'écoulement V. Le nombre des organes de fixation est compris entre 4 et 8.

Avantageusement, mais non limitativement, certaines saillies 37 comprennent les quatrièmes trous 50. Dans cet exemple, des premières saillies 370 dépourvues de trous sont disposées en alternance avec des deuxièmes saillies 371 pourvues de trous suivant la direction circonférentielle. En d'autres termes, une saillie sur deux comprend un quatrième trou 50.

De manière avantageuse, la surface annulaire interne 43a de l'alésage centrale 43 du capot 40 est destinée à être en contact (ou en appui) par complémentarité de forme avec une surface de portée annulaire 31a (cf. figure 4) du couvercle 31. La surface de portée annulaire 31a est définie par un épaulement 51 (visible sur la figure 6) disposé entre la portée annulaire 36 (saillies 37) du couvercle 31 et la paroi annulaire 32.

Sur les figures 2 et 5, la bordure annulaire 44 du capot 40 est située de manière adjacente à une première extrémité aval de la paroi radialement interne 53a du diffuseur 52. Un jeu infime de quelques millimètres (de l'ordre de 5 mm) est prévu entre l'extrémité aval de la paroi radialement interne 53a du diffuseur 52 et la bordure annulaire 44 du capot. Le diffuseur s'étend au moins en partie radialement à l'extérieur d'une portion du boîtier de palier arrière, du support de palier, du couvercle et aussi du capot. De même, le bord aval 55 du diffuseur 52 (et porté par la paroi radialement externe 53b) du diffuseur 52 s'étend radialement à l'extérieur du couvercle 31 et en aval de la bordure annulaire 44. Le bord aval 55 du diffuseur 52 est défini dans un plan P qui est situé en aval du plan P1. Le bord aval 55 s'étend radialement à l'extérieur du capot 40 et à distance du capot 40. Le bord aval 55 (d'une portion de paroi qui prolonge la paroi radialement externe 53b) couvre une portion du capot 40 de sorte que l'air de refroidissement circule autour du capot 40. De la sorte, l'air de refroidissement en sortie du diffuseur 52 est guidé au moins en partie par la surface radialement externe 40a du capot 40. Suivant une caractéristique avantageusement, mais non limitative, la paroi radialement interne 53a présente une surface radialement interne 53a1 qui présente une continuité de surface avec la surface radialement externe du capot 40.

Nous comprenons que l'air de refroidissement, en sortie des canaux 56, circule dans une portion de la veine d'écoulement formée par une portion de la paroi radialement externe 53b et une portion de la paroi du capot 40.

Le système anti-incendie a été décrit en relation avec une cavité annulaire ménagée en amont d'un disque de turbine libre mais peut être agencé dans une cavité en amont d'un disque d'une turbine liée dans laquelle circule un flux d'air de refroidissement.

Nous allons désormais décrire le procédé de montage du système anti-incendie 30 dans la turbomachine. Le procédé comprend une étape de fourniture du système d'étanchéité comprenant le diffuseur 52 et le capot 40. Préalablement, le procédé comprend une étape de mise en place et de fixation du support de palier 21 dans la turbomachine. Le procédé comprend ensuite une étape de mise en place du couvercle 31 autour du support de palier 21. Le couvercle 31 est positionné de manière que les premiers et deuxièmes trous 24, 35 soient en regard les uns avec les autres. Dans le présent exemple, les sections des premiers et deuxièmes trous sont circulaires. Les premiers organes de fixation 27 sont alors montés pour fixer la bride radiale 22b du support de palier 21 et la bride radiale 33 du couvercle 31.

Le procédé comprend une étape de fixation du boîtier de palier arrière 15 sur le support de palier 21. De manière avantageuse, le couvercle 31, le support de palier 21 et le boîtier 15 sont fixés avec les mêmes organes de fixation 27.

Le procédé comprend une étape de mise en place du diffuseur 52 dans la cavité 16. Lors de cette étape le diffuseur 52 est monté sur le boîtier de palier arrière 15. De manière avantageuse, le diffuseur 52 est fixé préalablement sur le boîtier 15 avant le montage du boîtier 15 dans la cavité 16. La fixation comprend une soudure ou une liaison boulonnée.

Le boîtier 15 est également monté avec la pièce structurelle 28.

Le procédé comprend également une étape de mise en place du capot 40 sur le couvercle 31. Le capot 40 est installé de manière que la paroi de fond 41 soit en contact avec la portée annulaire 36 du couvercle 31. Les quatrièmes trous 50 du capot 40 sont également positionnés de manière à être en regard avec les trous 49 du couvercle 31.

Le procédé comprend en outre une étape de fixation du capot 40 sur le couvercle 31. Lors de cette étape, les organes de fixation 48 tels que des vis sont engagés dans les trous du couvercle 31 et du capot 40.

L'air de refroidissement en sortie des injecteurs 17 pénètre dans chaque canal 56 puis est guidé vers la veine d'écoulement V d'air de refroidissement et en maintenant sa vitesse depuis la sortie des injecteurs 17. La vitesse d'écoulement de l'air de refroidissement est supérieure à toute vitesse de flamme générée dans la cavité par un éventuel départ de feu.

## Revendications

1. Ensemble pour une turbomachine (1), telle qu'un turboréacteur ou un turbopropulseur d'aéronef, l'ensemble comprenant au moins une turbine (3) ayant un disque (5) de turbine, une cavité annulaire (16) agencée en amont du disque (5) qui comprend un alésage interne (7) et un dispositif de refroidissement (14) destiné à alimenter la cavité (16) en air de refroidissement via des moyens d'injection (17), **caractérisé en ce que** l'ensemble comprend un système anti-incendie (30) comportant des moyens configurés de manière à d'une part, scinder la cavité annulaire (16) en une première cavité (16a) et en une deuxième cavité (16b) et d'autre part, à maintenir une vitesse de l'air de refroidissement en sortie des moyens d'injection (17) et à guider l'air de refroidissement dans la première cavité (16a) vers l'alésage interne (7) du disque (5) de turbine, les moyens comprenant un diffuseur (52) coopérant avec les moyens d'injection (17) et un capot (40) annulaire destiné à coopérer avec le diffuseur (52) et à couvrir des premiers organes de fixation (27) agencés dans la cavité (16), le diffuseur (52) et le capot (40) étant configurés de manière que l'air de refroidissement en sortie du diffuseur (52) est guidé au moins en partie par une surface radialement externe (40a) du capot (40).

2. Ensemble selon la revendication 1, **caractérisé en ce que** le diffuseur (52) est annulaire, s'étend entre un bord amont (54) et un bord aval (55) suivant un axe D et est pourvu de canaux (56) qui sont formés dans l'épaisseur d'une paroi annulaire (53) du diffuseur (52), les canaux ayant chacun un profil évolutif et débouchant chacun, d'une part dans le bord amont (54) à travers une pluralité de lumières (58), et d'autre part dans le bord aval (55) dans une ouverture (59) annulaire, les lumières (58) étant disposées autour de l'axe D et étant en communication fluidique avec les moyens d'injection (17) du dispositif de refroidissement (14).

3. Ensemble selon la revendication 2, **caractérisé en ce que** le diffuseur (52) présente une longueur prédéterminée (L1) entre le bord amont (54) et le bord aval (55), le bord aval (55) étant destiné à être sensiblement affleurant avec une extrémité radialement interne (12) d'un flasque (12) monté en amont du disque (5) de turbine et avec un jeu prédéterminé (J).

4. Ensemble selon l'une des revendications 2 à 3, **caractérisé en ce que** le système anti-incendie (30) est réalisé selon une loi géométrique définie par la formule suivante : $\alpha < \dfrac{39}{\sqrt{L/LC}}$ avec $\alpha$ étant un angle prédéterminé mesuré entre une première droite (D1) passant par un sommet d'une lumière (58), parallèle à un axe principal (E) respectif des canaux (56), et une deuxième droite (D2) tangente à un flanc (57a, 57b) d'un canal (56), L étant la longueur prédéterminée (L1) du diffuseur (52) et LC étant la largeur circonférentielle de chaque lumière (58).

5. Ensemble selon la revendication précédente, **caractérisé en ce que** le capot (40) annulaire est destiné à être monté sur un couvercle (31) de la turbomachine et le capot (40) comprend une paroi de fond (41) annulaire destinée être fixée sur une portée annulaire (36) du couvercle (31).

6. Ensemble selon la revendication précédente, **caractérisé en ce que** le capot (40) annulaire comprend une jupe annulaire (42) s'étendant depuis la paroi de fond (41) suivant un axe C du capot (40), la jupe annulaire (42) comprenant une portion tubulaire (45) et une portion tronconique (46) reliant la portion tubulaire à la paroi de fond (41) suivant l'axe C, le capot (40) comprenant un rayon de courbure (r1, r2) prédéterminé agencé d'une part, entre la portion tubulaire (45) et la portion tronconique (46) et d'autre part, entre la portion tronconique (46) et la paroi de fond (41).

7. Ensemble selon l'une des revendications 5 et 6, **caractérisé en ce que** le capot (40) présente une bordure annulaire (44) disposée de manière adjacente à une extrémité aval d'une paroi radialement interne (53a) du diffuseur (52), le diffuseur (52) comprenant une paroi radialement externe (53b) ayant une bordure aval (55) qui s'étend radialement à l'extérieur du capot (40) et à distance du capot (40).

8. Ensemble selon l'une quelconque des revendications 5 à 7, **caractérisé en ce que** le disque (5) de turbine comprend un rebord annulaire (9) s'étendant circonférentiellement autour de l'axe longitudinal et axialement suivant l'axe longitudinal vers l'amont, et **en ce que** le système anti-incendie (30) comprend une portion de la veine d'écoulement (V) d'air de refroidissement qui est délimitée au moins en partie par une surface radialement interne du rebord annulaire (9) et la surface radialement externe (40a) du capot (40).

9. Ensemble selon la revendication 6 et 8, **caractérisé en ce que** le rapport entre le rayon de courbure (r1, r2) prédéterminé et la hauteur (Dh) de la veine d'écoulement (V) d'air de refroidissement est supérieur à 1.

10. Turbomachine (1) en particulier d'un aéronef, ayant un axe longitudinal X et comprenant une turbine (3) reliée par un arbre fournissant une puissance mécanique, une cavité (16) annulaire agencée en amont d'un premier étage de la turbine (3), un dispositif de refroidissement (14) équipé des moyens d'injection (17), et un ensemble selon l'une quelconque des revendications précédentes, le système anti-incendie (30) étant agencé dans la cavité annulaire (16) et les moyens d'injection étant en communication fluidique avec les canaux (56) du diffuseur (52) (14).

11. Turbomachine (1) selon la revendication précédente, **caractérisée en ce qu'**elle comprend un support de palier (21) de guidage d'un arbre de la turbine (3) qui comprend une première bride radiale (22b), et un couvercle (31) muni d'une deuxième bride radiale (33) destinée à être fixée sur la première bride radiale (22b) par les premiers organes de fixation (27), les premiers organes de fixation étant répartis régulièrement autour de l'axe longitudinal X et le couvercle (31) comprenant une paroi annulaire (32) destinée à traverser l'alésage interne (7) du disque de turbine.

**Patentansprüche**

1. Baugruppe für ein Turbotriebwerk (1), in der Art eines Turbojet-, Turboproptriebwerks eines Luftfahrzeugs, wobei die Baugruppe mindestens eine Turbine (3), die eine Turbinenscheibe (5) aufweist, einen Ringhohlraum (16), der stromaufwärts der Scheibe (5) angeordnet ist, der eine innere Bohrung (7) und eine Kühlvorrichtung (14) umfasst, die dazu bestimmt ist, den Hohlraum (16) über Injektionsmittel (17) mit Kühlluft zu versorgen, umfasst, **dadurch gekennzeichnet, dass** die Baugruppe ein Brandschutzsystem (30) umfasst, das Mittel beinhaltet, die konfiguriert sind, um einerseits den Ringhohlraum (16) in einen ersten Hohlraum (16a) und in einen zweiten Hohlraum (16b) zu teilen, und andererseits eine Geschwindigkeit der Kühlluft am Ausgang der Injektonsmittel (17) aufrechtzuerhalten, und die Kühlluft in den ersten Hohlraum (16a) zur inneren Bohrung (7) der Turbinenscheibe (5) zu leiten, wobei die Mittel einen Diffusor (52), der mit den Injektionsmitteln (17) zusammenwirkt, und eine Ringabdeckung (40) umfassen, die dazu bestimmt ist, mit dem Diffusor (52) zusammenzuwirken, und erste Befestigungsorgane (27) abzudecken, die in dem Hohlraum (16) angeordnet sind, wobei der Diffusor (52) und die Abdeckung (40) konfiguriert sind, sodass die Kühlluft am Ausgang des Diffusors (52) mindestens teilweise über eine radial äußere Oberfläche (40a) der Abdeckung (40) geleitet wird.

2. Baugruppe nach Anspruch 1, **dadurch gekennzeichnet, dass** der Diffusor (52) ringförmig ist, sich zwischen einem stromaufwärts liegenden Rand (54) und einem stromabwärts liegenden Rand (55) entlang einer Achse D erstreckt, und mit Kanälen (56) versehen ist, die in der Dicke einer Ringwand (53) des Diffusors (52) gebildet sind, wobei die Kanäle jeweils ein evolutionäres Profil aufweisen und jeweils einerseits in den stromaufwärts liegenden Rand (54) durch eine Vielzahl von Lumen hindurch (58), und andererseits in den stromabwärts liegenden Rand (55) in eine Ringöffnung (59) münden, wobei die Lumen (58) um die Achse D herum angeordnet sind und in strömungstechnischer Kommunikation mit den Injektionsmitteln (17) der Kühlvorrichtung (14) sind.

3. Baugruppe nach Anspruch 2, **dadurch gekennzeichnet, dass** der Diffusor (52) eine vorbestimmte Länge (L1) zwischen dem stromaufwärts liegenden Rand (54) und dem stromabwärts liegenden Rand (55) aufweist, wobei der stromabwärts liegende Rand (55) dazu bestimmt ist, im Wesentlichen bündig mit einem radial inneren Ende (12) eines Flansches (12) zu sein, der stromaufwärts der Turbinenscheibe (5) und mit einem vorbestimmten Spiel (J) montiert ist.

4. Baugruppe nach einem der Ansprüche 2 bis 3, **dadurch gekennzeichnet, dass** das Brandschutzsystem (30) entsprechend einem geometrischen Gesetz ausgeführt ist, das durch die folgende Formel definiert ist:

$$\alpha < \frac{39}{\sqrt{L/LC}}$$

wobei $\alpha$ ein vorbestimmter Winkel ist, der zwischen einer ersten Geraden (D1), die über einen Scheitelpunkt eines Lumens (58), parallel zu einer entsprechenden Hauptachse (E) der Kanäle (56) führt, und einer zweiten Geraden (D2), an einer Flanke (57a, 57b) eines Kanals (56) anliegend gemessen wird, L die vorbestimmte Länge (L1) des Diffusors (52) ist und LC die Umfangsbreite eines jeden Lumens (58) ist.

5. Baugruppe nach dem vorstehenden Anspruch, **dadurch gekennzeichnet, dass** die Ringabdeckung (40) dazu bestimmt ist, auf einen Deckel (31) des Turbotriebwerks montiert zu werden, und die Abdeckung (40) eine Bodenringwand (41) umfasst, die dazu bestimmt ist, an einer Ringtragweite (36) des Deckels (31) befestigt zu werden.

6. Baugruppe nach dem vorstehenden Anspruch, **dadurch gekennzeichnet, dass** die Ringabdeckung (40) eine Ringschürze (42) umfasst, die sich von der Bodenwand (41) entlang einer Achse C der Abdeckung (40) erstreckt, wobei die Ringschürze (42) einen röhrenförmigen Abschnitt (45) und einen kegelstumpfförmigen Abschnitt (46) umfasst, der den röhrenförmigen Abschnitt mit der Bodenwand (41) entlang der Achse C verbindet, wobei die Abdeckung (40) einen vorbestimmten Krümmungsradius (r1, r2) umfasst, der einerseits zwischen dem röhrenförmigen Abschnitt (45) und dem kegelstumpfförmigen Abschnitt (46), und andererseits zwischen dem kegelstumpfförmigen Abschnitt (46) und der Bodenwand (41) angeordnet ist.

7. Baugruppe nach einem der Ansprüche 5 und 6, **dadurch gekennzeichnet, dass** die Abdeckung (40) eine ringförmige Einfassung (44) aufweist, die angrenzend an ein stromabwärts gelegenes Ende einer radial inneren Wand (53a) des Diffusors (52) angeordnet ist, wobei der Diffusor (52) eine radial äußere Wand (53b) umfasst, die eine stromabwärts gelegene Einfassung (55) aufweist, die sich radial außerhalb der Abdeckung (40) und im Abstand zur Abdeckung (40) erstreckt.

8. Baugruppe nach einem der Ansprüche 5 bis 7, **dadurch gekennzeichnet, dass** die Turbinenscheibe (5) einen ringförmigen Rand (9) umfasst, der sich umfänglich um die Längsachse herum und axial entlang der Längsachse stromaufwärts erstreckt, und dadurch, dass das Brandschutzsystem (30) einen Abschnitt der Kühlluftströmungsbahn (V) umfasst, der mindestens teilweise durch eine radial innere Oberfläche des ringförmigen Randes (9) und die radial äußere Oberfläche (40a) der Abdeckung (40) begrenzt ist.

9. Baugruppe nach Anspruch 6 und 8, **dadurch gekennzeichnet, dass** das Verhältnis zwischen dem vorbestimmten Krümmungsradius (r1, r2) und der Höhe (Dh) der Kühlluftströmungsbahn (V) größer als 1 ist.

10. Turbotriebwerk (1) insbesondere eines Luftfahrzeugs, das eine Längsachse X aufweist und eine Turbine (3), die durch eine Welle, die eine mechanische Leistung bereitstellt, verbunden ist, einen Ringhohlraum (16), der stromaufwärts einer ersten Stufe der Turbine (3) angeordnet ist, eine Kühlvorrichtung (14), die mit Injektionsmitteln (17) ausgestattet ist, und eine Baugruppe nach einem der vorstehenden Ansprüche umfasst, wobei das Brandschutzsystem (30) in dem Ringhohlraum (16) angeordnet ist, und die Injektionsmittel in strömungstechnischer Kommunikation mit den Kanälen (56) des Diffusors (52) (14) sind.

11. Turbotriebwerk (1) nach dem vorstehenden Anspruch, **dadurch gekennzeichnet, dass** es einen Lagerbock (21) zum Leiten einer Welle der Turbine (3) umfasst, der einen ersten Radialflansch (22b) umfasst, und einen Deckel (31), der mit einem zweiten Radialflansch (33) versehen ist, der dazu bestimmt ist, durch die ersten Befestigungsorgane (27) am ersten Radialflansch (22b) befestigt zu werden, wobei die ersten Befestigungsorgane regelmäßig um die Längsachse X herum verteilt sind, und der Deckel (31) eine Ringwand (32) umfasst, die dazu bestimmt ist, die innere Bohrung (7) der Turbinenscheibe zu durchqueren.

**Claims**

1. Assembly for a turbomachine (1), such as an aircraft turbojet or turboprop engine, the assembly comprising at least one turbine (3) having a turbine disc (5), an annular cavity (16) arranged upstream of the disc (5) which comprises an internal bore (7) and a cooling device (14) intended to supply the cavity (16) with cooling air via injection means (17), **characterised in that** the assembly comprises a fire safety system (30) comprising means configured so as, on the one hand, to divide the annular cavity (16) into a first cavity (16a) and into a second cavity (16b) and, on the other hand, to maintain a speed of the cooling air at the outlet of the injection means (17) and to guide the cooling air in the first cavity (16a) towards the internal bore (7) of the turbine disc (5), the means comprising a diffuser (52) cooperating with the injection means (17) and an annular cowling (40) intended to cooperate with the diffuser (52) and to cover first attachment members (27) arranged in the cavity (16), the diffuser (52) and the cowling (40) being configured in such a way that the cooling air leaving the diffuser (52) is guided at least in part by a radially external surface (40a) of the cowling (40).

2. Assembly as claimed in claim 1, **characterised in that** the annular diffuser (52) extends between an upstream edge (54) and a downstream edge (55) along an axis D and is provided with channels (56) which are formed in the thickness of an annular wall (53) of the diffuser (52), the channels each having an evolving profile and each opening out on the one hand in the upstream edge (54) through a plurality of slits (58), and on the other hand in the downstream edge (55) in an annular opening (59), the slits (58) being disposed around the axis D and being in fluidic communication with the injection means (17) of the cooling device (14).

3. Assembly as claimed in claim 2, **characterised in that** the diffuser (52) has a predetermined length (L1) between the upstream edge (54) and the downstream edge (55), the downstream edge (55) being intended to be substantially flush with a radially internal end (12) of a flask (12) mounted upstream of the turbine disc (5) and with a predetermined clearance (J).

4. Assembly according to one of claims 2 to 3, **characterised in that** fire safety system (30) is produced according to a geometric law defined by the following formula: $\alpha < \dfrac{39}{\sqrt{L/LC}}$ with $\alpha$ being a predetermined angle measured between a first straight line (D1) passing through a summit of a slit (58), parallel to a respective main axis (E) of the channels (56), and a second straight line (D2) tangential to a flank (57a, 57b) of a channel (56), L being the predetermined length (L1) of the diffuser (52) and LC being the circumferential width of each slit (58).

5. Assembly according to the preceding claim, **characterised in that** the annular cowling (40) is intended to be mounted on a cover (31) of the turbomachine and the cowling (40) comprises an annular bottom wall (41) intended to be attached to an annular bearing surface (36) of the cover (31).

6. Assembly according to the preceding claim, **characterised in that** the annular cowling (40) comprises an annular skirt (42) extending from the bottom wall (41) along an axis C of the cowling (40), the annular skirt (42) comprising a tubular segment (45) and a frustoconical segment (46) connecting the tubular segment to the bottom wall (41) along the axis C, the cowling (40) comprising a predetermined radius of curvature (r1, r2) arranged, on the one hand, between the tubular segment (45) and the frustoconical segment (46) and, on the other hand, between the frustoconical segment (46) and the bottom wall (41).

7. Assembly according to any of claims 5 and 6, **characterised in that** the cowling (40) has an annular border (44) disposed adjacent a downstream end of a radially internal wall (53a) of the diffuser (52), the diffuser (52) comprising a radially external wall (53b) having a downstream border (55) which extends radially outwardly of the cowling (40) and away from the cowling (40).

8. Assembly according to any one of claims 5 to 7, **characterised in that** the turbine disc (5) comprises an annular rim (9) extending circumferentially about the longitudinal axis and axially upstream along the longitudinal axis, and **in that** the fire safety system (30) comprises a segment of the cooling air flow duct (V) which is delimited at least in part by a radially internal surface of the annular rim (9) and the radially external surface (40a) of the cowling (40).

9. Assembly according to claims 6 and 8, **characterised in that** the ratio between the predetermined radius of curvature (r1, r2) and the height (Dh) of the cooling air flow duct (V) is greater than 1.

10. A turbomachine (1), in particular for an aircraft, having a longitudinal axis X and comprising a turbine (3) connected by a shaft providing a mechanical power, an annular cavity (16) arranged upstream of a first stage of the turbine (3), a cooling device (14) equipped with injection means (17), and an assembly according to any one of the preceding claims, the fire safety system (30) being arranged in the annular cavity (16) and the injection means being in fluidic communication with the channels (56) of the diffuser (52).

11. The turbomachine (1) according to the preceding claim, **characterised in that** it comprises a bearing support (21) for guiding a turbine shaft (3) which comprises a first radial flange (22b), and a cover (31) equipped with a second radial flange (33) intended to be attached to the first radial flange (22b) by first attachment members (27), the first attachment members being regularly distributed around the longitudinal axis X and the cover (31) comprising an annular wall (32) intended to pass through the internal bore (7) of the turbine disc.

FIG. 1

FIG. 2

FIG. 3

FIG. 4

FIG. 5

FIG. 6

FIG. 7

Coupe A -A

FIG. 8

Coupe B -B

FIG. 9

Coupe C -C

FIG. 10

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2960020 A1
- EP 2192268 A2
- US 4882902 A
- US 4759688 A
- EP 3159490 A

**Littérature non-brevet citée dans la description**

- Mémento des pertes de charges. Eyrolles, 1986